Europäisches Patentamt

European Patent Office

Office européen des brevets

(19)

(11) Veröffentlichungsnummer : **0 162 900**
**B1**

(12) **EUROPÄISCHE PATENTSCHRIFT**

(45) Veröffentlichungstag der Patentschrift :
**02.03.88**

(21) Anmeldenummer : **85900071.3**

(22) Anmeldetag : **23.11.84**

(86) Internationale Anmeldenummer :
**PCT/DK 84/00113**

(87) Internationale Veröffentlichungsnummer :
**WO/8502468 (06.06.85 Gazette 85/13)**

(51) Int. Cl.⁴ : **G 01 P   3/36**

(54) **MESSVORRICHTUNG, VORZUGSWEISE ZUM MESSEN DER DREHZAHL ROTIERENDER KÖRPER.**

(30) Priorität : **25.11.83 DK 5392/83**

(43) Veröffentlichungstag der Anmeldung :
**04.12.85 Patentblatt 85/49**

(45) Bekanntmachung des Hinweises auf die Patenterteilung : **02.03.88 Patentblatt 88/09**

(84) Benannte Vertragsstaaten :
**AT CH DE FR GB LI NL SE**

(56) Entgegenhaltungen :
**US-A- 3 371 214**
**US-A- 3 436 655**
**US-A- 3 559 065**
**US-A- 3 902 116**
**US-A- 4 037 157**

(73) Patentinhaber : **PLOUG, Ole**
**Skovvaenget 42**
**DK-6440 Augustenborg (DK)**

(72) Erfinder : **PLOUG, Ole**
**Skovvaenget 42**
**DK-6440 Augustenborg (DK)**

(74) Vertreter : **Patentanwälte Dipl.-Ing. Klaus Westphal**
**Dr. rer. nat. Bernd Mussgnug Dr. rer.nat. Otto Buchner**
**Waldstrasse 33**
**D-7730 VS-Villingen (DE)**

EP 0 162 900 B1

## Beschreibung

Die Erfindung betrifft eine Meßvorrichtung vorzugsweise zum Messen der Drehzahl rotierender Körper, bestehend aus einer auf der Vorrichtung angeordneten, in transparente und nichttransparente Sektoren eingeteilten Scheibe, einer auf einer Seite der in Sektoren eingeteilten Scheibe befindlichen aus einer Anzahl einzelner Lichtemitter bestehenden Lichtquelle, einem Sensor, der sich im Weg des durch die Scheibe durchtretenden Lichtstrahles befindet, sowie einer Einrichtung zur Umwandlung der Ausgangssignale des Sensors in Informationssignale bezüglich der Drehzahl und/oder der Beschleunigung des rotierenden Körpers. Diese Vorrichtung wird bevorzugt als Drehzahlmesser verwendet, kann aber auch in Verbindung mit geradlinigen Bewegungen benützt werden, wenn die in Sektoren eingeteilte Scheibe in geeigneter Weise entsprechend angepaßt wird.

Eine solche Meßvorrichtung ist aus der US-A-3 436 655 und der US-A-4 037 157 bekannt.

Die Bezeichnung « Lichtquelle » bezieht sich im vorliegenden Text auf einen Emitter sichtbaren oder unsichtbaren Lichts oder anderer elektromagnetischer Wellen, welche ebenso wie sichtbares Licht strahlen und auch in gleicher Weise unterbrochen und reflektiert werden können.

### Technischer Hintergrund der Erfindung

Bei Drehzahlmessern der oben genannten Art ist die Erzielung hoher Auflösung bei niedriger Drehzahl mit Problemen verbunden. Bei derartigen Drehzahlen ist die Anzahl der vom Sensor empfangenen Impulse niedrig und die Signal-Abtastfrequenz sowie die Impulsfrequenz haben die gleiche Größenordnung. Entsprechend ist ein Drehzahlmesser, welcher zur Erzielung einer brauchbaren Genauigkeit bei niedriger Drehzahl eine in kleine Sektoren unterteilte Scheibe aufweist, aufgrund der Maximalfrequenz des Sensors bei hohen Drehzahlen problematisch. Zur Lösung dieser Probleme wurde in « IEEE — Transactions of Instrumentation and Measurement » Band 114-2, Nr. 2, Mai 1972, vorgeschlagen, die Lichtquelle und den Sensor auf einer Welle anzuordnen, welche die Verlängerung der Achse des rotierenden Körpers darstellt und die Lichtquelle mit einer bekannten Drehzahl in gleicher oder umgekehrter Richtung wie derjenigen des rotierenden Körpers anzutreiben, je nach der Art des Problems, ob es sich z. B. um zu geringe Auflösung bei niedriger Drehzahl, um Überschreitung der Maximalfrequenz des Sensors bei hoher Drehzahl oder um Einhaltung einer Mindestfrequenz bei niedriger Drehzahl handelt. Die Ausgangssignale des Sensors werden digital verarbeitet, und je nach der spezifischen Logik der angeschlossenen Schaltkreise wird die Drehzahl und/oder Beschleunigung des Körpers überwacht. Ein Nachteil dieser bekannten Vorrichtung liegt darin, daß sowohl die Energieversorgung als auch die Ausgangssignale des Sensors über die Rotationsachse übertragen werden, was zur Folge hat, daß in den übertragenen Signalen Rauschen induziert wird und außerdem Abnützungsprobleme auftreten.

### Kurze Beschreibung der Erfindung

Der Erfindung liegt die Aufgabe zugrunde, diese Nachteile zu vermeiden.

Diese Aufgabe wird erfindungsgemäß dadurch gelöst, daß die Lichtquelle aus einer Anzahl einzelner Lichtemitter besteht, die derartig ausgelegt sind, daß die Lichtimpulse phasenverschoben emittiert werden und daß der lichtempfindliche Bereich des Sensors der Breite eines transparenten und eines nichttransparenten Sektors entspricht.

Die phasenverschobenen Lichtimpulse bilden auf den Emittern eine Art « elektrische Zeitung », auf der die sich bewegenden Impulsfolgen als eine sich bewegende Lichtquelle wahrgenommen werden. Die ortsfeste Lichtquelle, die in getrennte lichtemittierende Glieder unterteilt ist, erhält dadurch die gleichen Eigenschaften wie eine sich bewegende Lichtquelle, ohne jedoch die mit der Drehbewegung verbundenen Nachteile aufzuweisen. Um ein Ausgangssignal zu erhalten, das analog zu einem Signal ist, welches durch einen rotierenden Sensor von einer entsprechend rotierenden Lichtquelle empfangen wird, müssen die Abmessungen des Sensors einem transparenten und einem nichttransparenten Sektor entsprechen. Der Sensor kann in einzelne Glieder aufgeteilt sein, sofern die Gesamtmaße seines lichtempfindlichen Bereiches einem transparenten und einem nichttransparenten Sektor entsprechen. Falls der Sensor in einzelne Glieder aufgeteilt ist, sollten die Ausgangssignale über eine gemeinsame Leitung, an welche die Glieder angeschlossen sind, addiert werden. Lichtemitter sind preiswerte Bauteile und die Verwendung mehrerer derartiger Emitter stellt kein wirtschaftliches Problem dar. Entsprechend ist ein Impulsgenerator, der die nötigen Impulse erzeugt, mit welchen die Lichtemitter angeregt werden, ein handelsüblicher und vergleichsweise billiger Bauteil.

Vorzugsweise werden gemäß der Erfindung vier Lichtemitter verwendet. Bei Verwendung von nur vier Gliedern sind die Impulse paarweise um 180° phasenverschoben und können folglich mit einem einzigen Impulsgenerator erzeugt werden, was den elektronischen Aufbau der Vorrichtung vereinfacht. Die Verwendung einer größeren Zahl von Emittern ermöglicht ein glatteres Signal des Sensors, besonders bei normalem Auslösepegel.

Die Lichtemitter können erfindungsgemäß auch in Abständen kreisförmig um die Achse des rotierenden Körpers angeordnet sein, wobei der Sensor in die entsprechende Anzahl von Gliedern aufgeteilt wird. Bei dieser Anordnung kann die praktische Ausführung der Lichtemitter einfach sein, da um jedes Glied mehr Raum verfügbar ist. Es ist zwar nicht der gleiche Teil der in Sektoren eingeteilten Scheibe, der aufeinanderfolgend die vier Emitter verdunkelt, aber das Licht, das von dem entsprechend aufgeteilten Sensor empfangen wird, ändert sich ebenso als wenn die Lichtemitter dicht nebeneinander angeordet wären und einem ungeteilten Sensor mit der nötigen lichtempfindlichen Fläche gegenüber lägen.

Erfindungsgemäß haben die Lichtimpulse eine derartige Länge und Form, daß die Lichtintensität der überlagerten Impulse im wesentlichen konstant ist. Dadurch ist sowohl eine genau definierte Form der vom Sensor empfangenen Impulse sichergestellt als auch eine unveränderte Erfassung im logischen Schaltkreis, in welchem das Ausgangssignal des Sensors verarbeitet wird.

Bei einer weiteren Ausführungsform der Erfindung sind die Lichtemitter in zwei Gruppen angeordnet, von denen jede an einen Impulsgenerator derart angeschlossen ist, daß die Impulsfolgen in den zwei Gruppen verschiedene Geschwindigkeit, gegebenenfalls verschiedene Winkelgeschwindigkeit, aufweisen. Bei dieser Anordnung kann der Meßbereich vergrößert werden, da dieser Meßbereich denjenigen Teil umfassen kann, in dem die eine oder die andere Gruppe der Lichtemitter das Licht mit der Winkelgeschwindigkeit des rotierenden Körpers emittiert. In diesem Bereich können verwendbare Signale von der anderen Gruppe der Lichtemitter und den entsprechenden Sensorgliedern erhalten werden. Eine andere Möglichkeit besteht darin, die Lichtemitter in zwei Gruppen mit unterschiedlichem Winkelabstand anzuordnen und an einen gemeinsamen Impulsgenerator anzuschliessen. Diese Anordnung ermöglicht eine Vergrößerung des Meßbereiches, ohne die Kosten durch einen weiteren Impulsgenerator zu erhöhen.

Erfindungsgemäß kann mindestens ein Lichtemitter beiden Gruppen angehören, insb. wenn die Emitter an einen gemeinsamen Impulsgenerator angeschlossen sind und beide Impulsfolgen zwei verschiedene Winkelgeschwindigkeiten aufweissen. Dies kann die praktische Anordnung vereinfachen, ohne die Funktion zu stören. In den meisten Fällen können sogar zwei Lichtemitter beiden Gruppen angehören.

Kurze Beschreibung der Zeichnung

Anhand der Figuren wird ein Ausführungsbeispiel der Erfindung näher erläutert. Es zeigt :
Figur 1 eine schematische Darstellung einer Ausführungsform der Erfindung,
Figur 2 einen Schnitt durch eine in Sektoren unterteilte Scheibe, den Sensor und die Leuchtdioden,
Figur 3 eine graphische Darstellung der Lichtemission der Leuchtdioden über eine Zeitperiode und
Figur 4 eine graphische Darstellung eines vom Sensor empfangenen Signales.

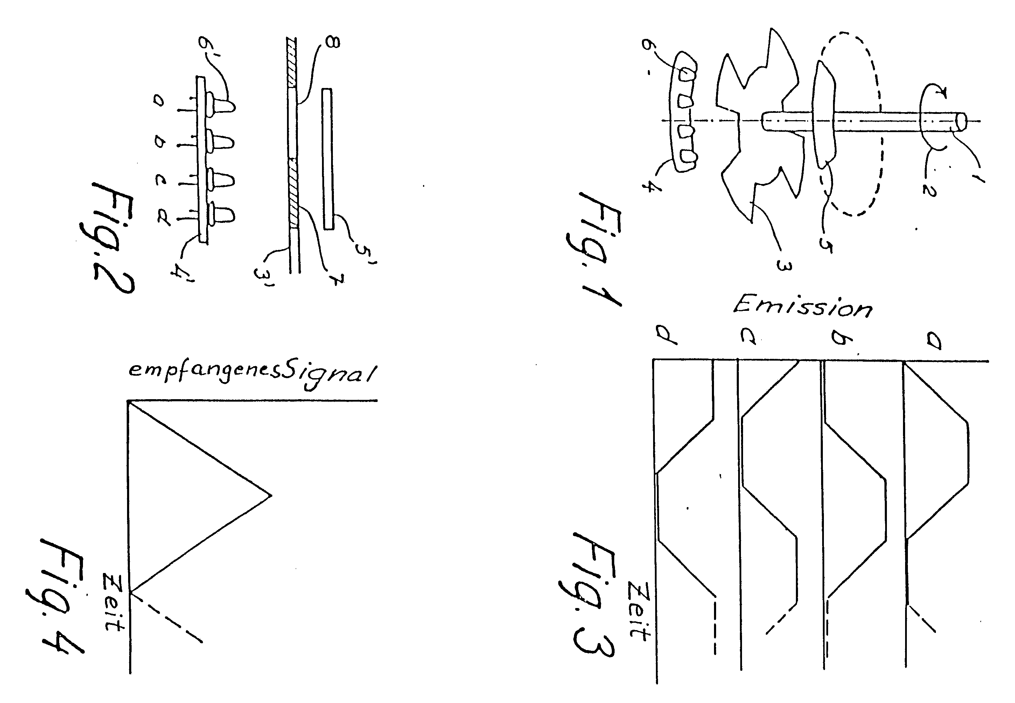

In Figur 1 wird schematisch eine Vorrichtung zum Messen der Drehzahl eines rotierenden Körpers gezeigt. Der rotierende Körper ist in der Zeichnung durch die Welle 1 dargestellt. Der Körper dreht sich mit einer Geschwindigkeit V, dargestellt durch den Pfeil 2. Auf der Welle ist eine in Sektoren eingeteilte Scheibe 3 mit vier Flügeln angebracht, die voneinander durch ausgeschnittene oder transparente Sektoren mit der gleichen Breite wie die Flügel getrennt sind. Unter der in Sektoren eingeteilten Scheibe 3 befindet sich ein Lichtemitter 4, und über der Scheibe und gegenüber dem Lichtemitter ist ein Sensor angeordnet, der Licht vom Emitter 4 durch die transparenten Sektoren der Scheibe 3 empfängt. Der Emitter ist an eine (nicht gezeigte) Energiequelle und der Sensor an eine (nicht gezeigte) Einrichtung angeschlossen, welche die Ausgangssignale des Sensors in Informationssignale bezüglich der Drehzahl und/oder der Beschleunigung des rotierenden Körpers umwandeln kann. Eine derartige Vorrichtung ist in « IEEE Transactions on Instrumentation and Measurement » Band 114-2, Nr. 2, Mai 1972 beschrieben. Bei dieser bekannten Vorrichtung sind die Lichtemitter 4 und der Sensor 5 derart angeordnet, daß sie sich um die Verlängerung der Drehachse des Körpers mit einer vorbestimmten konstanten Geschwindigkeit drehen, um auch dann das Messen der Drehzahl zu ermöglichen, wenn diese Null ist. Da die Befestigung einer Lichtquelle und eines Sensors an einem rotierenden Körper eine Reihe von Nachteilen aufweist, ist es die Aufgabe der Erfindung, eine Ausgabe der Erfindung, eine Ausführung für einen ortsfesten Lichtemitter und Sensor zu schaffen.

Bei der Vorrichtung gemäß der Erfindung enthält der Lichtemitter eine Anzahl von Leuchtdioden 6, vorzugsweise mindestens vier, die an eine Energiequelle angeschlossen sind, welche aus einem Impulsgenerator besteht, der jede Leuchtdiode mit phasenverschobenen Impulsen versorgt, wodurch die Leuchtdioden abwechslungsweise Licht dergestalt emittieren, daß gewissermaßen eine Folge von Lichtemissionen durch die vier Dioden läuft. Wie aus Figur 2 ersichtlich, sind die Lichtemitter 4' und der Sensor 5' bezüglich der Scheibe 3' einander entgegengesetzt angeordnet und der lichtempfindliche Bereich des Sensors muß mindestens einem transparenten und einem nichttransparenten Sektor auf der Scheibe 3' entsprechen. Im vorliegenden Fall ist es nicht erforderlich, daß der Emitter sichtbares Licht emittiert, da jede elektromagnetische Welle, die sich wie Licht unterbrechen läßt, in der Vorrichtung gemäß der Erfindung verwendbar ist. Die Form der Impulse der vier Dioden a, b, c und d ist in Abhängigkeit von der Zeit dargestrellt. Durch gleichzeitige Betrachtung von Figur 2 und 3 ergibt sich das resultierende vom Sensor 5' empfangene Signal. Dieses Signal ist in Figur 4 dargestellt. Es ist ersichtlich, daß die Form der Impulse von der Ruhestellung der in Sektoren eingeteilten Scheibe abhängig ist und eine Änderung der Stellung eine Phasenverschiebung aber keine Frequenzänderung bedingt. Es ergibt sich zwar eine geringfügige Formänderung, was jedoch bei normalem Auslösepegel nur einen unbedeutenden Einfluß ausübt. Wenn jedoch die Scheibe bewegt wird, tritt eine Frequenzänderung ein, wobei die Form unverändert bleibt. Dies bedeutet, daß zur Erlangung einer Information über die Drehzahl und/oder die Beschleunigung eines rotierenden Körpers das Ausgangssignal analog zur Verarbeitung bei bekannten Vorrichtungen, bei denen Lichtemitter und Sensor um die Verlängerung der Drehachse des Körpers drehbar angeordnet sind, verarbeitet werden kann. Durch eine Frequenzänderung der phasenverschobenen Impulse des Impulsgenerators kann der Meßbereich der Vorrichtung erweitert werden und insb. den Bereich um Null erfassen.

Die Zahl der Leuchtdioden beträgt, wie bereits erwähnt, vorzugsweise vier, kann aber auch erhöht oder gegebenenfalls auf Kosten der Meßgenauigkeit sogar verringert werden. Die Form der Lichtimpulse sollte derart sein, daß bei Überlagerung die daraus resultierende Lichtemission konstant ist. Dies wird durch Lichtimpulse erreicht, die, wie in Figur 3 gezeigt, trapezförmig sind und durch die in Sektoren unterteilte Scheibe einen im wesentlichen sägezahnförmigen Impuls auf dem Sensor ergeben. Eine vollkommene Sägezahnform ist vorzuziehen, da die geraden Flanken eine genaue Überwachung der Lichtsignale in der Verarbeitungseinheit für das Ausgangssignal des Sensors auch dann ermöglichen, wenn der Auslösepegel nicht optimiert ist.

In Figur 1 sind die vier Leuchtdioden nahe beieinander als eine einzige Lichtquelle dargestellt. Diese Anordnung ist in der Praxis weniger geeignet, da gewisse Vorsichtsmaßnahmen getroffen werden müssen, um die Lichtemitter derart abzuschirmen, daß nur ein Teil der Scheibe, d. h. ein transparenter und ein nichttransparenter Sektor, dem Licht ausgesetzt ist. Die vier Leuchtdioden können ebensogut kreisförmig um die Welle 1 verteilt sein. Der Sensor muß dann in eine entsprechende Anzahl einzelner Glieder aufgeteilt werden, wobei der gesamte lichtempfindliche Bereich einem transparenten und einem nichttransparenten Sektor der Scheibe entsprechen muß. Es besteht aber auch die Möglichkeit, Sensor und Lichtquelle zu verteilen, wenn in der Vorrichtung zwei Gruppen von Lichtemittern und Sensoren verwendet werden, wobei deren Winkelgeschwindigkeiten verschieden oder sogar entgegengesetzt sind. Falls die zwei Gruppen die gleiche aber entgegengesetzte Winkelgeschwindigkeit aufweisen, können die beiden Gruppen vom gleichen Impulsgenerator versorgt werden, oder eine bzw. mehrere Leuchtdioden können beiden Gruppen angehören.

Abgesehen von der mechanischen Vereinfachung der Vorrichtung ist auch die Einstellung derselben erleichtert. Darüber hinaus kann ein geeigneter — möglicherweise automatischer — Umschalter in die Verarbeitungseinheit für das Ausgangssignal des Sensors eingebaut werden, wodurch der Meßbereich der Vorrichtung wesentlich erweitert wird, welche — da Lichtquelle und Sensor ortsfest sind — bei der Signalübertragung unempfindlich gegen Störeinflüsse ist. Die Breite der Sektoren auf der Scheibe kann dem Meßbereich, in welchem die Vorrichtung verwendet wird, angepaßt werden, desgleichen kann die Frequenz der Impulsfolgen optimiert werden, um eine hohe Meßgenauigkeit im normalen Arbeitsbereich zu erzielen.

Industrielle Anwendung der Erfindung

Die Vorrichtung wurde im Zusammenhang mit der Messung der Drehzahl und/oder der Beschleunigung eines rotierenden Körpers beschrieben, sie kann aber auch entsprechend angepaßt werden, um die Geschwindigkeit und/oder die Beschleunigung von geradlinig bewegten Körpern zu messen. Die in Sektoren eingeteilte Scheibe muß durch eine lineare Meßleiste ersetzt werden, die auf dem Körper oder längs des Verfahrwegs desselben angeordnet ist. Die Dioden der Lichtquelle werden in einer Linie neben der Meßleiste angeordnet und in enger Reihe an den Impulsgenerator angeschlossen.

Durch den großen Meßbereich und den einfachen Aufbau ist die Vorrichtung nicht nur geeignet, wenn hohe Genauigkeit verlangt wird, wie z. B. bei Werkzeugmaschinen, Robotern, Antennen und Flugzeugen, sondern auch bei weniger hohen Anforderungen bezüglich der allgemeinen Geschwindigkeitsanzeige oder Geschwindigkeitssteuerung, z. B. bei Transportausrüstung oder -vorrichtungen, Verarbeitungsgeräten usw.

**Patentansprüche**

1. Meßvorrichtung vorzugsweise zum Messen der Drehzahl rotierender Körper, bestehend aus einer auf der Vorrichtung angeordneten, in transparente und nichttransparente Sektoren eingeteilten Scheibe (3), einer auf einer Seite der Scheibe befindlichen Lichtemitter Lichtquelle (4), einem Sensor (5), der im Weg des durch die Scheibe hindurchtretenden Lichtstrahles angeordnet ist, sowie einer Einrichtung zur Umwandlung der Ausgangssignale des Sensors in Informationssignale bezüglich der Drehzahl und/ oder der Beschleunigung des rotierenden Körpers, dadurch gekennzeichnet, daß die aus einer Anzahl einzelner Lichtemitter (6) bestehenden derart ausgelegt sind, daß Lichtimpulse phasenverschoben emittiert werden, und daß der lichtempfindliche Bereich des Sensors der Breite eines transparenten und eines nichttransparenten Sektors entspricht.

2. Vorrichtung nach Anspruch 1, dadurch gekennzeichnet, daß die Zahl der Lichtemitter vier beträgt.

3. Vorrichtung nach Anspruch 1 oder 2, dadurch gekennzeichnet, daß die Lichtemitter in Abständen voneinander kreisförmig um den rotierenden Körper angeordnet sind, wobei der Sensor in die entsprechende Anzahl von Gliedern aufgeteilt ist.

4. Vorrichtung nach Anspruch 1, dadurch gekennzeichnet, daß die Länge und Form der Lichtimpulse derart ist, daß die Lichtintensität der überlagerten Lichtimpulse im wesentlichen konstant ist.

5. Vorrichtung nach Anspruch 3, dadurch gekennzeichnet, daß die Lichtemitter in zwei Gruppen angeordnet sind, welche beide dergestalt an einem Impulsgenerator angeschlossen sind, daß in den beiden Gruppen Impulsfolgen erzeugt werden, deren Phasenverschiebung verschieden, gegebenenfalls entgegengesetzt ist.

6. Vorrichtung nach Anspruch 3, dadurch gekennzeichnet, daß die Lichtemitter in zwei jeweils an einen Impulsgenerator angeschlossenen Gruppen angeordnet sind, wobei die Anordnung derart gewählt ist, daß die Lichtemitter der beiden Gruppen einen veschiedenen Winkelabstand aufweisen.

7. Vorrichtung nach Anspruch 6, dadurch gekennzeichnet, daß wenigstens einer der Lichtemitter beiden Gruppen angehört.

## Claims

1. Apparatus for measuring preferably the rotational speed of rotating bodies comprising a sectored disc (3) with transparent and non-transparent sectors placed on the apparatus, a light source (4) placed on one side of the sectored disc and comprising a number of separate light emitters (6), a sensor (5) placed in the light beam transmitted through the disc and means for transforming output signals from the sensor into information signals relating to the speed and/or acceleration of the rotating body, characterized in that the light emitters are adapted to emit light pulses of displaced phase and the field of sensitivity of the sensor corresponds to the width of one transparent and one non-transparent sector.

2. Apparatus according to claim 1, characterized in that the number of light emitters is four.

3. Apparatus according to claim 1 or 2, characterized in that the light emitters are arranged in spaced relationship along a circle around the rotating body, the sensor being cut up into corresponding elements.

4. Apparatus according to claim 1, characterized in that the light pulses have such a duration and shape that the light intensity of the superposed light pulses is substantially constant.

5. Apparatus according to claim 3, characterized in that the light emitters are arranged in two series which are mutually connected with a pulse generator in such a way that in the two series pulse trains are generated, the phase-displacement of which is different, possibly opposite.

6. Apparatus according to claim 3, characterized in that the light emitters are placed in two series mutually connected with a pulse generator, the arrangement being such that the light emitters of the two series are placed with different angular spacing.

7. Apparatus according to claim 6, characterized in that at least one of the light emitters is common for the two series.

## Revendications

1. Dispositif de mesure, de préférence pour mesurer la vitesse de rotation d'organes rotatifs, constitué par un disque (3) monté sur le dispositif et divisé en secteurs transparents et non transparents, une source lumineuse (4) située d'un côté du disque et composée d'un certain nombre d'émetteurs de lumière individuels (6), un capteur (5) qui est monté sur le parcours du rayon lumineux traversant le disque, ainsi que par un équipement destiné à convertir les signaux de sortie du capteur en signaux d'information concernant la vitesse de rotation et/ou l'accélération de l'organe rotatif, caractérisé en ce que les émetteurs de lumière sont agencés de telle façon que des impulsions de lumière soient émises de manière déphasée, et en ce que la région photosensible du capteur correspond à la largeur d'un secteur transparent et d'un secteur non transparent.

2. Dispositif selon la revendication 1, caractérisé en ce que les émetteurs de lumière sont au nombre de quatre.

3. Dispositif selon la revendication 1 ou 2, caractérisé en ce que les émetteurs de lumière sont disposés à certains intervalles les uns des autres sous la forme d'un cercle autour de l'organe rotatif, le capteur étant divisé en un nombre correspondant d'éléments.

4. Dispositif selon la revendication 1, caractérisé en ce que la longueur et la forme des impulsions de lumière sont telles que l'intensité lumineuse des impulsions de lumière superposées est sensiblement constante.

5. Dispositif selon la revendication 3, caractérisé en ce que les émetteurs de lumière sont disposés en deux groupes qui sont tous deux reliés à un générateur d'impulsions de telle manière que dans les deux groupes soient générées des successions d'impulsions dont le déphasage est différent et éventuellement opposé.

6. Dispositif selon la revendication 3, caractérisé en ce que les émetteurs de lumière sont disposés en deux groupes reliés chacun à un générateur d'impulsions, l'agencement étant choisi de telle façon que les émetteurs de lumière des deux groupes présentent un intervalle angulaire différent.

7. Dispositif selon la revendication 6, caractérisé en ce qu'au moins l'un des émetteurs de lumière appartient aux deux groupes.

Fig. 1

Fig. 3

Fig. 2

Fig. 4